# EUROPEAN PATENT APPLICATION

(11) **EP 2 236 397 A1**
(43) Date of publication of application: **06.10.2010**
(21) Application number: 09161515.3
(22) Date of filing: 29.05.2009
(51) Int. Cl.: B62J 1/16

(54) **Mounting assembly for a child bicycle seat**

(30) Priority: 30.03.2009 EP 09156640
(71) Applicant: Dremefa Beheer B.V., 6983 BM Doesburg (NL)
(72) Inventor: Hagedoorn, Wilhelm Jasper, 6881 ML, VELP (NL)
(74) Representative: Brookhuis, Hendrik Jan Arnold

(57) **Abstract**

A mounting assembly (1) for mounting a child bicycle seat to a bicycle frame is provided, in particular behind the saddle. The bicycle frame comprises at least a rear triangle structure including a seat tube, a pair of seat stays and a pair of chain stays. The mounting assembly (1) comprising means for attaching the child seat to. The mounting assembly furthermore comprises bracket elements, seat tube attachment means for attachment of a front portion of each of the bracket elements to the seat tube and seat stay attachment means for attachment of a rear portion of the bracket elements to the seat stays.

## Description

The present invention relates to mounting a child seat to a bicycle frame, in particular behind the saddle. The bicycle frame comprises at least a rear triangle structure including a seat tube, a pair of seat stays and a pair of chain stays. The seat stays form the rear fork and are occasionally referred to as fork legs.

From the prior art it is known to mount a child seat to a luggage carrier, such as for example is disclosed in EP1 086 886 A1 and NL 8303085. As bicycles do not all have a luggage carrier or do not have a sufficiently rigid luggage carrier to carry the weight of the child and the child seat, these solutions do not meet the needs that has arisen with the modern leisure bicycles like for example the popular all terrain bikes (ATB).

Another solution, in which a child seat can be positioned above a luggage carrier is known from EP 0 347 005 B1. In this known solution a forward extension is attached to the bottom of the child seat, which forward extension is adapted for attachment to a rear fork of the bicycle by means of a clamping member. Furthermore, a substantially U-shaped bracket is rotatably attached to the bottom and comprising the footrests, said bracket being provided with forked elements adapted to coact with clamping members attached releasably to the fork legs (seat stays). The clamping members are fixedly attached to the fork legs.

A disadvantage of the seat disclosed in EP 0 347 005 is that the load of the seat and a child in it is mainly carried by the clamping members. The downward loads on the clamping members have to be resisted by the clamping force of the clamping members on the fork legs. Even if the clamping members are initially secured tight on the fork legs, in the course of time they may slide downward along the fork legs. In practise it is seen that the seat still rests on the luggage carrier. With modern leisure bikes such as ATB-s, often a luggage carrier is omitted or of very light design, such that this problem becomes more imminent.

An object of the present invention is to provide a mounting assembly for a bicycle seat which provides an easy mounting and removal of the child seat on the bicycle, yet provides a solid support for the child seat when mounted on the bicycle.

This object is achieved with a mounting assembly for mounting a child bicycle seat to a bicycle frame, in particular behind the saddle, the bicycle frame comprising at least a rear triangle structure including a seat tube, a pair of seat stays and a pair of chain stays, the mounting assembly comprising means for attaching the child seat to, wherein the mounting assembly furthermore comprises bracket elements, seat tube attachment means for attachment of a front portion of each of the bracket elements to the seat tube and seat stay attachment means for attachment of a rear portion of the bracket elements to the seat stays.

The mounting assembly according to the invention is attached to the bicycle frame at three attachment points, one front attachment point at the seat tube and two rear attachment points at the seat stays. Because the rear attachment points are interconnected with the front attachment point by the bracket elements, the distance between the attachment points is fixed, whereby downward shifting of the attachment points in the rear triangle of the bicycle frame is inhibited. The attachment points rest as it were on the seat tube and the seat stays. In this way it is assured that the mounting assembly stays in position also under the continual load of the child seat that is attached to it and a child in the child seat.

In a preferred embodiment the distance between the seat tube attachment means and the seat stay attachment means is adjustable. This has the advantage that the mounting assembly can be adapted to different bicycle frame shapes and dimensions. Thus a universally applicable mounting assembly is provided which can be used with all or nearly all bicycle frames found on the market.

In a further preferred embodiment the distance between the seat tube attachment means and the seat stay attachment means is adjustable by the rigid connecting member being adjustable in length.

Preferably, the bracket element comprises two or more interlockable telescoping members, one of which is fixedly attached to the seat tube attachment means and the other one is fixedly attached to the seat stay attachment means. Preferably the telescoping members can be interlocked at a number of predefined positions.

In a preferred embodiment the mounting assembly comprises a substantially U-shaped mounting bracket with a front portion and two legs extending from the front portion, which front portion is designed to engage a front side of the seat tube and wherein the seat tube attachment means comprise said front portion as well as a clamping member for clamping the front portion against the seat tube, wherein the legs in the mounted state extend towards the seat stay attachment means.

The invention will be described in further detail in the following description of a preferred embodiment with reference to the drawing, in which:
Fig. 1 shows a view in perspective from above of a preferred embodiment of a mounting assembly according to the invention,
Fig. 2 shows the mounting assembly of Fig. 1 in a view in perspective from the top,
Fig. 3 shows a side elevational view of the mounting assembly of Fig. 1 adjusted in its shortest length,
Fig. 4 shows a side elevational view of the mounting assembly of Fig. 1 adjusted in its greatest length,
Fig. 5 shows a view in perspective of a bicycle frame with a mounting assembly according to Fig. 1 mounted thereon,
Fig. 6 illustrates in a side elevational view how a child seat is installed on the mounting assembly,
Fig. 7 shows in a side elevational view a child seat that is mounted to the bicycle frame by means of the mounting assembly of Fig. 1,
Fig. 8 shows in a side elevational view of a child seat and a luggage carrier that are mounted to the bicycle frame by means of the mounting assembly of Fig. 1, and
Fig. 9 shows a view in perspective of a bicycle frame on which foot rests are mounted by means of the mounting assembly.

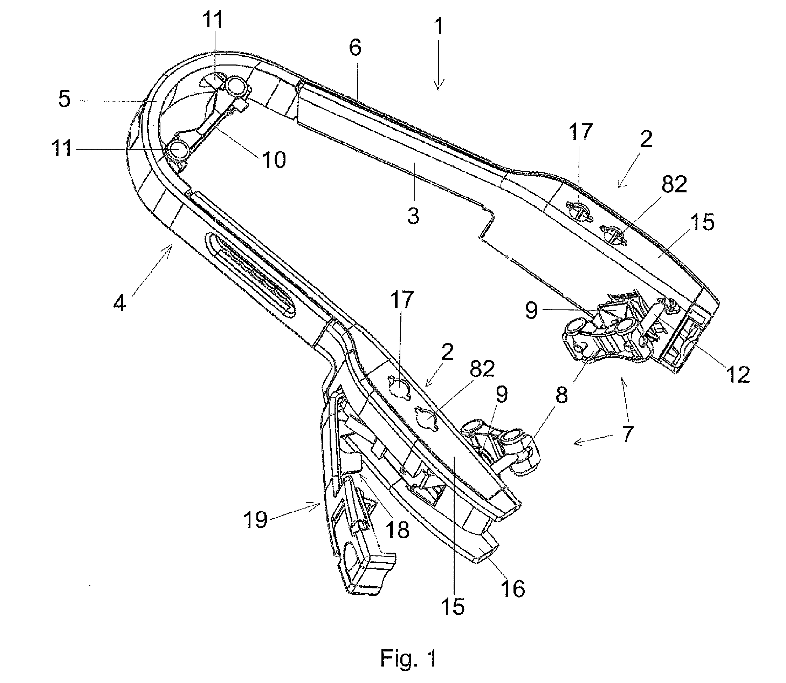

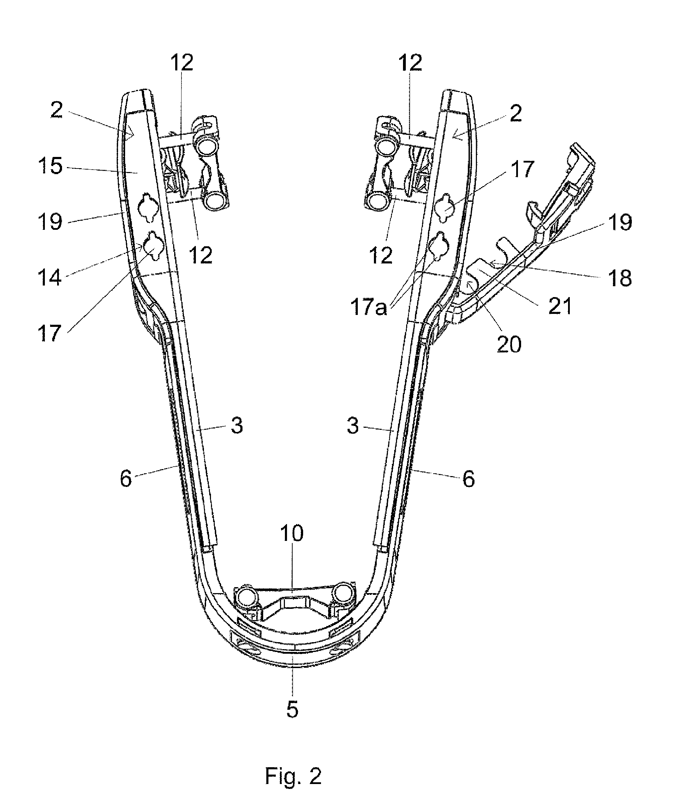

In Figs 1 - 4 is shown a mounting assembly 1 according to the invention. The mounting assembly 1 comprises a generally U-shaped bracket 4 with a curved front portion 5 and two legs 6 extending therefrom. At the radially inner side of the curved portion 5 a clamping member 10 is provided which is connected to the curved portion 5 with tensioning bolts 11. In a mounted state, which will be described further below, a seat tube 54 is clamped between the inner side of the curved portion 5 and the clamping member 10.

The mounting assembly 1 furthermore comprises a pair of casings 2. Each casing 2 is provided with attachment means 7 including a clamping member 8 and an engagement member 9, between which, in a mounted state, a seat stay of the bicycle frame is clamped as will be described in further detail below. The engagement member 9 is tiltably connected to the casing 2. The clamping member 8 is connected to the casing 2 by means of tensioning bolts 12.

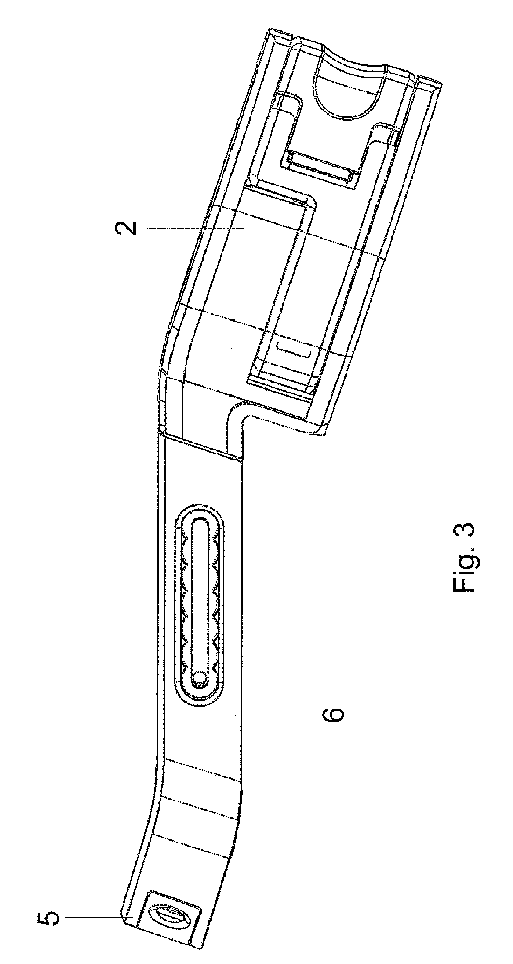

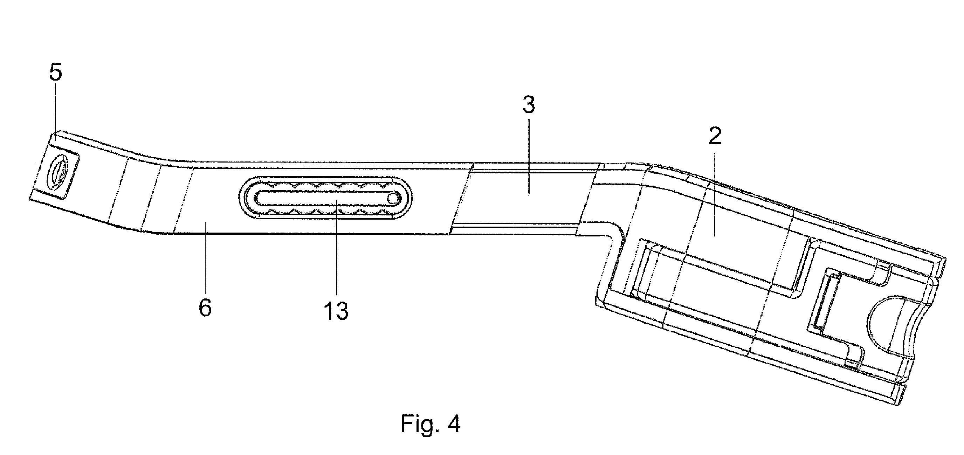

Each casing 2 is provided with a channel like profile 3 which extends from the casing 2. The legs 6 are in a guided engagement with the channel like profiles 3. The legs 6 and the channel like profiles 3 form telescopically extendable bracket elements. The legs 6 and the channel like profile can be interlocked by means of locking means 13. In the shown embodiment the locking means provide a number of predefined locking positions, thereby predefining a number of lengths to which the bracket elements can be adjusted. The bracket elements can be adjusted between a shortest length as is shown in Fig. 3 and a greatest length as is shown in Fig. 4.

The mounting assembly 1 comprises receiving means 14 for receiving a coupling member of the child seat. The receiving means 14 include apertures 17 in the top 15 and the bottom 16 of the casing 2 through which the coupling members of the child seat can be inserted to extend through the casing 2.

The casing 2 is provided with a closure 19 which is hingedly attached thereto an can be moved between an open position to a closed position. The closure 19 is provided with a lip 19a with a tooth which can snap into a recess 19b in the casing. The lip 19a is moveable by operation of a button 19c connected thereto to release the lip 19a from the recess 19b such that the closure can be moved from the closed position to the open position.

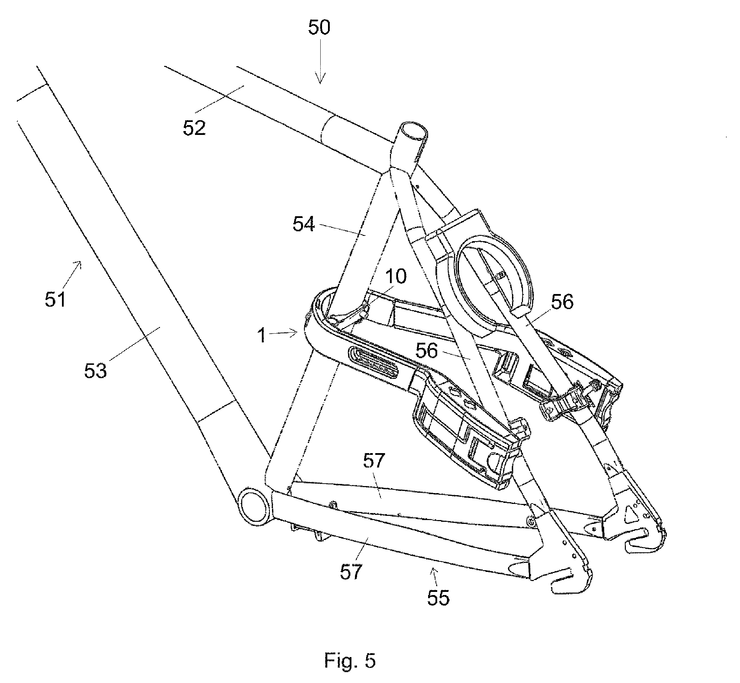

The closure 19 is provided with locking means 18, which in the shown embodiment include a plate 21 with a recess 20 which can engage around the coupling member of the seat when the coupling member is extending through the casing 2. It should be noted that also other means for locking the coupling member to the mounting assembly 1 are conceivable. In Fig. 5 is shown how the mounting assembly 1 is mounted to a bicycle frame 50. The bicycle frame 50 as it is shown in this figure comprises a main triangle 51 which includes a top tube 52 , a down tube 53 and a seat tube 54. Furthermore the frame 50 comprises a rear triangle structure 55, which includes the seat tube 54, seat stays 56 and chain stays 57.

As can be seen from Fig. 5 the curved portion 5 of the U-shaped bracket engages the front of the seat tube 54. The clamping member 10 engages the seat tube 54 on the rear side. By tensioning the bolts 11 the saddle tube is firmly clamped between the curved portion and the clamping member.

From Fig. 5 can be seen that each of the engament members 9, which is connected to the side of the casing 2 that is facing the frame, engages one of the seat stays 56. The engagement member 9 is tiltable, such that it is able to adapt its position to the specific orientation of the seat stay 56. Thereby the mounting assembly 1 can be more easily used with bicycle frames 50 with different dimensions and shapes. The clamping member 8 engages the opposite side of the seat stay 56, in this case the inner side. The seat stay 56 is clamped between the clamping member 8 and the engagement member 9.

It is noted that the engagement member could also be replaced by a flexible part which under pressure adapts its shape to the seat stay 56 it engages.

In the mounted state the upper side of the casing 2 is slightly inclined downwards towards the rear as can be seen in Fig. 5.

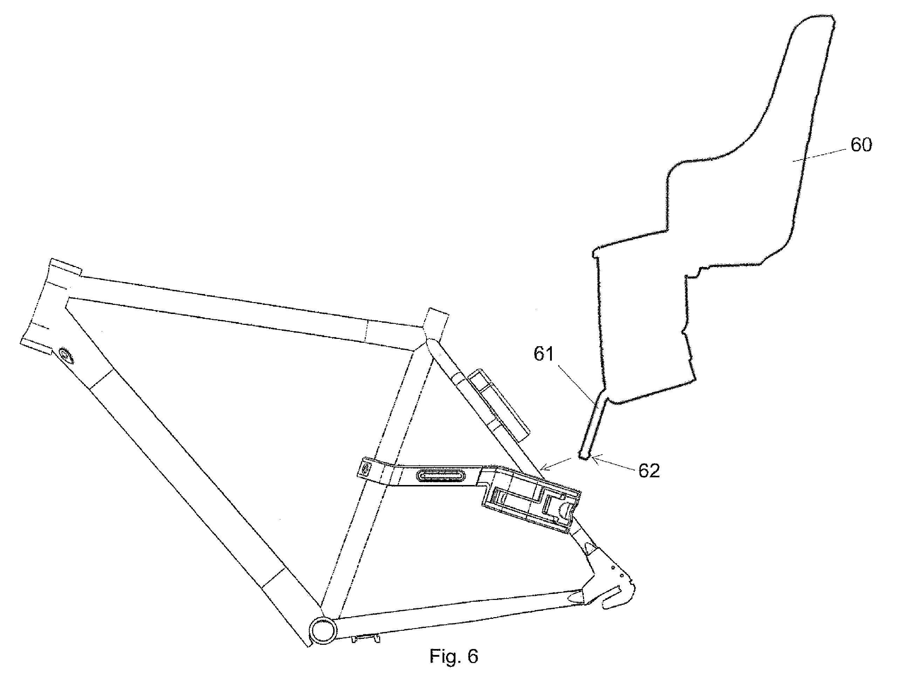

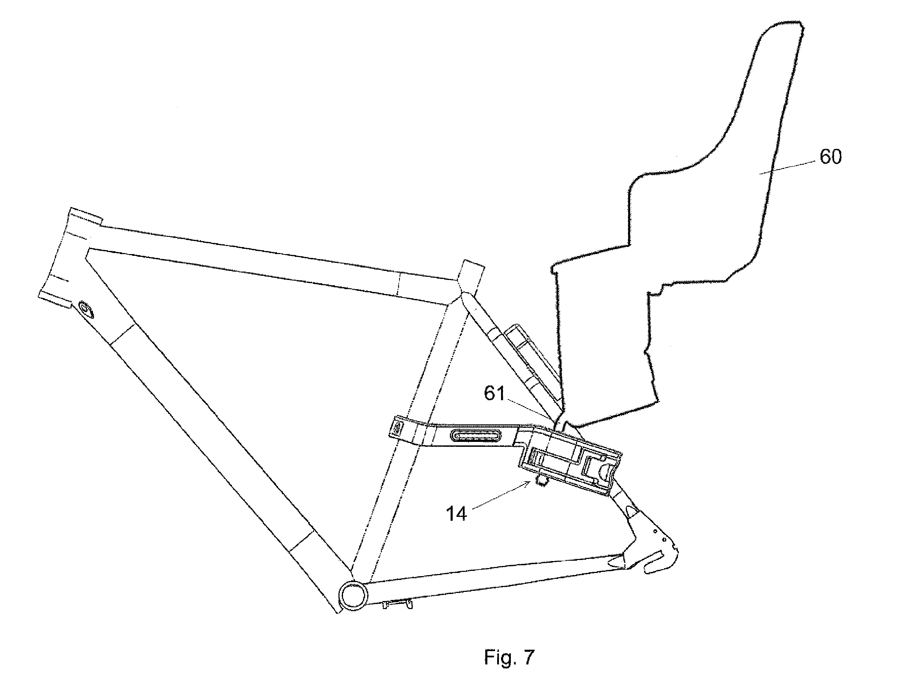

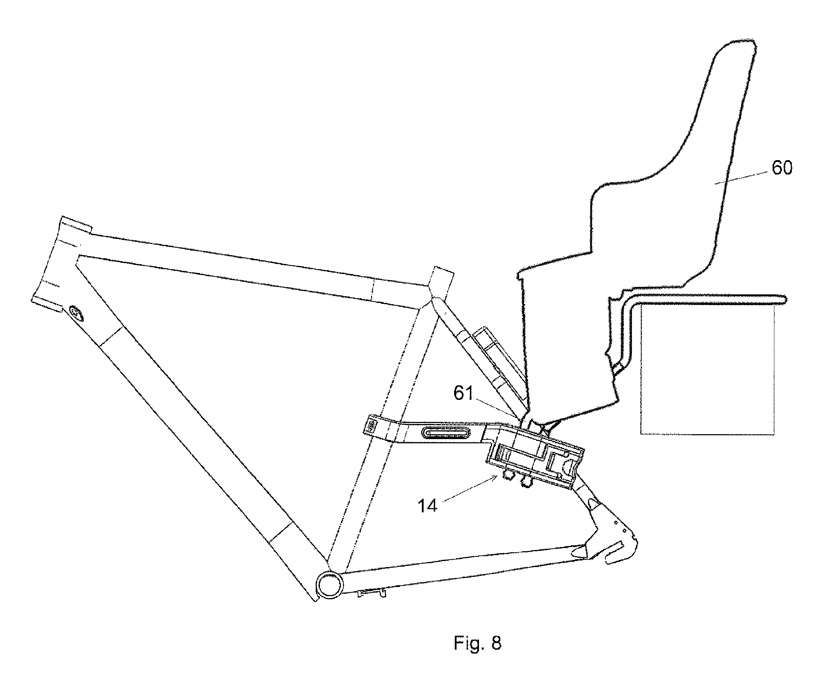

In Fig. 6 is illustrated how a child seat 60 is brought into engagement wih the mounting assembly 1. The seat 60 has coupling rods 61. In Figs 7 and 8 is shown how the coupling rods 61 are inserted in the apertures 17 of the receiving means 14 of the mounting assembly 1. Each rod 61 has at its free end portion one or more radially extending protrusions 62. The apertures 17 in the top and bottom of the casing 2 include cut outs 17a, such that the rod end protions with the protrusions 62 can be inserted through the apertures. When the closure 19 is in the closed position the edge of the recess 20 in the plate 21 extends around the end portion of the rod 61 above the protrusions 62. The recess 20 is shaped such that the protrusions 62 cannot pass the plate 21. The rod 61 can only be inserted through the casing 2 when the closure 19 is in the open state.

The mounting assembly 1 provides a robust support for the child seat 60 and a child seated in it. The bracket elements provide a lever, which helps resisting the moments that are induced by the weight of the seat 60 and the child. Furthermore downward shifting of the attachment points in the rear triangle structure 55 of the bicycle frame is inhibited. The attachment points rest as it were on the seat tube and the seat stays. In this way it is assured that the mounting assembly 1 stays in position on the frame during use.

In Fig. 8 is shown how a luggage carrier 80 is coupled to the mounting assembly 1. In the casing 2 are incorporated further receiving means which include apertures 82 in the top and bottom of the casing as can be seen in Figs 1, 2 and 5. The apertures 82 in the embodiment shown have the same shape as the apertures 17 and for their description is referred to the description of the apertures 17. The luggage carrier 80 has coupling rods 81 similar to the coupling rods 61 of the child seat 60 and is locked by similar locking means as for the rods 61 of the child seat.

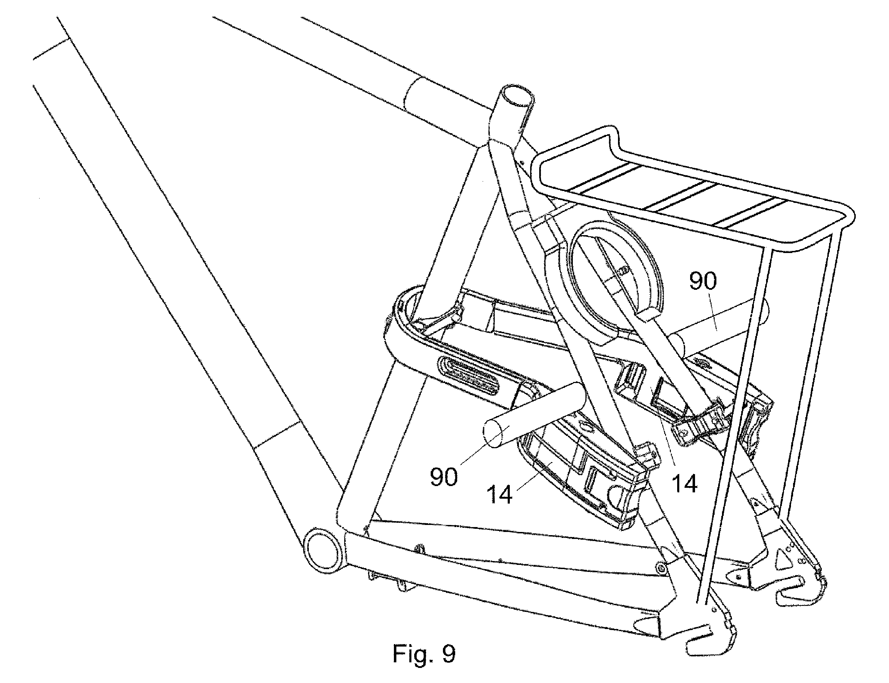

It is also possible to couple other objects to the mounting assembly 1 according to the invention. It is for example possible to connect foot rests 90 to the receiving means 14 as is shown in Fig. 9. When children are growing up they at some point will not fit in the child seat 60 anymore. Mostly the older children are still transported on a luggage carrier, sometimes provided with a cushion and/or a backrest which can be folded down. It is known to provide separate footrests near the wheel axle, such that he child can climb itself on the back of the bicycle. In more modern bicycles the axle is often not reachable anymore due to a fully closed chain guard. It is also known to have footrests attached to the seat stays. However in the latter embodiment, if a child constantly steps with its full weight on a footrest it will eventually slide down. The mounting assembly according to the present invention provides a robust support which can also be used for mounting footrests to a bicycle frame. For example it is possible to provide a footrest with two coupling rods which are inserted in the apertures 17 and 82 respectively. However also other constructions are conceivable.

## Claims

1. Mounting assembly for mounting a child bicycle seat to a bicycle frame, in particular behind the saddle, the bicycle frame comprising at least a rear triangle structure including a seat tube, a pair of seat stays and a pair of chain stays, the mounting assembly comprising means for attaching the child seat to, **characterized in that** the mounting assembly furthermore comprises bracket elements, seat tube attachment means for attachment of a front portion of each of the bracket elements to the seat tube and seat stay attachment means for attachment of a rear portion of the bracket elements to the seat stays.

2. Mounting assembly according to claim 1, wherein the distance between the seat tube attachment means and the seat stay attachment means is adjustable.

3. Mounting assembly according to claim 2, wherein the bracket element is adjustable in length.

4. Mounting assembly according to any one of the preceding claims, wherein the bracket element comprises two or more interlockable telescoping members, one of which is fixedly attached to the seat tube attachment means and the other one is fixedly attached to the seat stay attachment means.

5. Mounting assembly according to any one of the preceding claims, wherein the mounting assembly comprises a substantially U-shaped mounting bracket with a front portion and two legs extending from the front portion, which front portion is designed to engage a front side of the seat tube and wherein the seat tube attachment means comprise said front portion as well as a clamping member for clamping the front portion against the saet tube, wherein the legs in the mounted state extend towards the seat stay attachment means.

6. Mounting assembly according to any one of the preceding claims, wherein the seat stay attachment means comprises an engagement member for engaging the seat stay, which engagement member is freely tiltable so as to automatically adjust its position upon engagement of the seat stay.

7. Mounting assembly according to any one of the preceding claims, wherein the seat stay attachment means comprises a clamping member for clamping the seat stay against the bracket element.

8. Mounting element according to any one of the preceding claims, wherein the means for attaching the child seat to, comprise receiving means for receiving at least one coupling member of the child seat.

9. Mounting assembly according to any one of the preceding claims, wherein at least one of the receiving means includes a locking means for preventing inadvertent removal of the coupling member of the seat from the receiving means.

10. Mounting assembly according to claim 9, wherein the mounting assembly comprises a pair of casings coupled to the bracket elements, said casings incorporating the receiving means.

11. Mounting assembly according to any one of the preceding claims, wherein the casing comprises a closure, which is moveable between an open position and a closed position, which closure is provided with the locking means, such that in the closed position of the closure, the locking means engage the coupling member of the seat, and in the open position of the closure, the locking means are released from the coupling member, such that the coupling member can be removed from the receiving means.

12. Mounting assembly according to any one of the preceding claims, wherein the mounting assembly comprises a coupling feature for coupling a coupling member of a luggage carrier to.

13. Combination of a mounting assembly according to any one of the preceding claims and a bicycle child seat with coupling members for coupling said child seat with said mounting assembly.

14. Combination of a mounting assembly according to any one of the claims 1-12 and a luggage carrier having coupling members for coupling said laggage carrier with said mounting assembly.

15. Combination of a mounting assembly according to any one of the claims 1-12 and a pair of foot rests with coupling members for coupling said child seat with said mounting assembly.
